Europäisches Patentamt

European Patent Office

Office européen des brevets

(19)

(11) Publication number: **0 215 663 B1**

# EUROPEAN PATENT SPECIFICATION

(12)

(45) Date of publication of patent specification: **18.12.91**   (51) Int. Cl.⁵: **G11B 15/675**

(21) Application number: **86307089.2**

(22) Date of filing: **15.09.86**

(54) Tape cassette loading and unloading apparatus having a lock mechanism.

(30) Priority: **13.09.85 JP 141318/85 U**

(43) Date of publication of application:
**25.03.87 Bulletin 87/13**

(45) Publication of the grant of the patent:
**18.12.91 Bulletin 91/51**

(84) Designated Contracting States:
**DE FR GB**

(56) References cited:
**EP-A- 0 140 211      EP-A- 0 150 128**
**EP-A- 0 190 044      DE-A- 3 346 209**
**FR-A- 2 463 968      US-A- 3 964 096**
**US-A- 4 018 403**

(73) Proprietor: **VICTOR COMPANY OF JAPAN, LIMITED**
**12, 3-chome, Moriya-Cho Kanagawa-ku**
**Yokohama-Shi Kanagawa-Ken 221(JP)**

(72) Inventor: **Sato, Manabu**
**No. 290-20 Kumizawa-Cho Totsuka-Ku**
**Yokohama-Shi Kanagawa-Ken(JP)**
Inventor: **Ikekawa, Masaki**
**No. 5-18-3, Nagao Tama-Ku**
**Kawasaki-Shi Kanagawa-Ken(JP)**

(74) Representative: **Robinson, John Stuart et al**
**Marks & Clerk Alpha Tower Suffolk Street**
**Queensway**
**Birmingham, B1 1TT(GB)**

## Description

The present invention generally relates to tape cassette loading and unloading apparatuses, and more particularly to a tape cassette loading and unloading apparatus provided in a magnetic recording and/or reproducing apparatus and having a holder which is inserted with a tape cassette, a belt-driven transmitting mechanism for moving the holder between a cassette receiving position and a predetermined loading position, and a lock mechanism for locking the transmitting mechanism when the holder reaches the predetermined loading position.

Conventionally, a tape cassette loading and unloading apparatus provided in a magnetic recording and/or reproducing apparatus comprises a holder for receiving a tape cassette which is inserted into the recording and/or reproducing apparatus. The holder is movable between a cassette receiving position where an inserted tape cassette is received and a predetermined loading position where a recording or a reproduction is carried out with respect to a magnetic tape accommodated within the tape cassette. The holder is moved by a rotational driving force of a drive motor transmitted by way of a worm gear coupled to a rotary shaft of the drive motor and a transmitting mechanism coupled to the worm gear and the holder. The worm gear comprises a worm and a worm wheel which meshes with the worm. When the drive motor is stopped at a time when the holder reaches the predetermined loading position during a loading mode or when the holder reaches the cassette receiving position during an unloading mode, a force acts on the holder so as to rotate the worm wheel or rotate toothed wheels of the transmitting mechanism. However, due to the meshing relationship between the worm and the worm wheel which meshes with the worm, the worm wheel does not rotate and the holder is locked in the predetermined loading position or the cassette receiving position. Accordingly, the worm gear also functions as a lock mechanism for locking the holder in the predetermined loading position or the cassette receiving position.

But when the holder is stopped, a load acts on the worm gear. The load acting on the worm wheel or the worm is large and may damage the worm gear. Hence, it is necessary to provide a resilient member in the transmitting mechanism and resiliently absorb the movement in the transmitting mechanism when the holder stops in the predetermined loading position or the cassette receiving position, in order to reduce the load acting on the worm gear when the holder stops. As a result, the construction of the tape cassette loading and unloading apparatus becomes complex.

Accordingly, in a conceivable tape cassette loading and unloading apparatus, it is possible to provide a pulley on the rotary shaft of the drive motor instead of providing the worm gear. In this case, the holder is moved by the rotational driving force of the drive motor which is transmitted by way of the pulley, a belt provided between the pulley and the transmitting mechanism, and the transmitting mechanism. When the holder stops in the predetermined loading position or the cassette receiving position, the belt slips and it is possible to prevent an excessively large load from being applied on the transmitting mechanism.

However, in the case of the holder which is moved by way of the belt-driven transmitting mechanism, the holder in the predetermined loading position may be moved by an external force which acts on the holder. That is, when an external vibration or shock is applied on the holder in the predetermined loading position, the toothed wheels of the transmitting mechanism may rotate and hence rotate the pulley and the drive motor by way of the belt. As a result, there is a problem in that the holder may move from the predetermined loading position and make it impossible to carry out the recording or reproduction on the recording and/or reproducing apparatus.

Moreover, in the case of the holder which is moved by way of the belt-driven transmitting mechanism, it is possible to conceive a construction in which the holder is moved to the predetermined loading position by a rotary member which is driven by the drive motor, the rotary member rotates further against a resilient member when the holder reaches the predetermined loading position so as to push against and keep the holder in the predetermined loading position by an urging force of the resilient member, and the rotary member is locked in this state by a locking member. However, according to this conceivable construction, the load on the rotary member is large because the rotary member moves the holder to the predetermined loading position by the rotary displacement thereof, the rotary member pushes and keeps the holder in the predetermined loading position via the resilient member, and the rotary member is locked by the locking member in the state where the rotary member is rotated against the urging force of the resilient member. In addition, the drive motor must have a large driving force in order to push the holder to the predetermined loading position by the rotary member against the urging force of the resilient member, and there is a problem in that the drive motor becomes bulky. Furthermore, there is a problem in that the lock member must be provided in addition to a reduction gear mechanism which drives the rotary member.

EP-A-0 190 044, which was published after the priority date of the present application but claims an earlier priority date, discloses a tape cassette loading and unloading apparatus in which a holder is driven by a motor via a belt mechanism. The holder moves horizontally between a cassette insertion position and an insertion completion position and vertically between the insertion completion position and a loading position. A lock mechanism locks the belt mechanism when the holder reaches the loading position. A pushing member pushes the top of a cassette as the holder moves from the insertion completion position to the loading position.

US-A-3 964 096 and FR-A-2 463 968 disclose similar arrangements but omitting the pushing member EP-A-0 150 128 discloses a pushing member of this type.

According to the invention, there is provided a tape cassette loading and unloading apparatus as defined in the appended Claim 1.

Preferred embodiments of the invention are defined in the other appended claims.

It is thus possible to provide a tape cassette loading and unloading apparatus in which a pushing member is used to stably maintain a tape cassette to a loaded position without play by a sufficiently large pushing force when a holder inserted with a tape cassette is moved to a predetermined loading position and a transmitting mechanism is positively locked when the holder reaches the predetermined loading position. Thus, it is possible to push the tape cassette to the loaded position with a relatively large pushing force because the pushing member is rotated by a driving gear of the transmitting mechanism so as to push a top surface of the tape cassette. As a result, it is possible to positively and stably maintain the tape cassette in the loaded position without play. In addition, since the holder is driven by a gear which has an untoothed part and is in mesh with the driving gear, the operation of pushing the tape cassette and the operation of driving of the holder are divided between two members, that is, the driving gear and the gear with the untoothed part, and it is possible to prevent an excessively large torque from being applied to one member. Moreover, although a relatively large force is required to push the tape cassette to the loaded position, it is unnecessary to use a bulky motor because the operation of pushing the tape cassette and the operation of driving the holder are divided between the driving gear and the gear with the untoothed part. Furthermore, since the gear with the untoothed part is locked by the driving gear, it is possible to rigidly lock the gear with the untoothed part even when an external force acts on the holder, and the reliability of the apparatus is improved especially from the point of view that the gear with the untoothed part is locked and the holder is accordingly prevented from moving upwardly from the predetermined loading position.

The present invention will be further described, by way of example, with reference to the accompanying drawings, in which:-

FIG. 1 is a side view showing an embodiment of the tape cassette loading and unloading apparatus according to the present invention;

FIG. 2 is a plan view showing the tape cassette loading and unloading apparatus shown in FIG. 1;

FIGS. 3A and 3B are a perspective view and a side view respectively showing a recording and/or reproducing apparatus applied with the present invention together with a tape cassette for explaining an insertion of a tape cassette into the recording and/or reproducing apparatus;

FIGS. 4 and 5 are a front view and a rear view respectively showing the tape cassette loading and unloading apparatus shown in FIG.I;

FIG.6 is a side view showing an essential part of the tape cassette loading and unloading apparatus shown in FIG.I for explaining the construction of a transmitting mechanism and a lock mechanism;

FIG.7 is a side view showing the tape cassette loading and unloading apparatus shown in FIG.I in a state where a holder is in an insertion completion position;

FIG.8 is a circuit diagram showing the circuit construction of a motor switch shown in FIG.I;

FIGS.9(A) through 9(C) are timing charts for explaining the operation of the motor switch in relation to the operation of a motor;

FIG.I0 is a side view showing the tape cassette loading and unloading apparatus shown in FIG.I in a state where the tape cassette is moved to a loaded position; and

FIG.II is a side view showing an essential part of the tape cassette loading and unloading apparatus shown in FIG.I for explaining the operation of the lock mechanism when the tape cassette is moved to the loaded position.

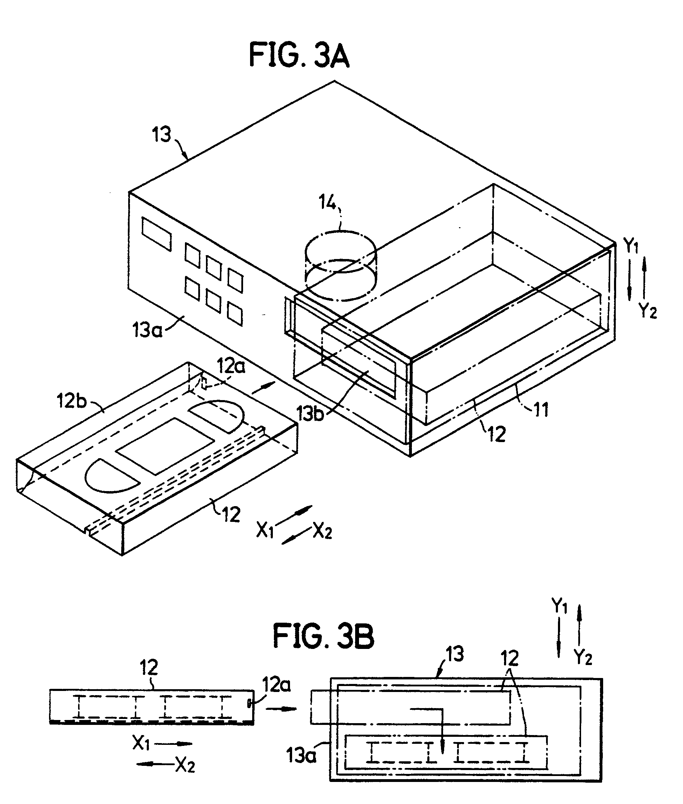

An embodiment of the tape cassette loading and unloading apparatus according to the present invention is shown in FIGS.I and 2. In FIGS.I and 2, a tape cassette loading and unloading apparatus II is mounted within a magnetic recording and/or reproducing apparatus (hereinafter simply referred to as a VTR) I3. A tape cassette I2 which is played on the VTR I3 has an approximately rectangular parallelepiped shape with top and bottom surfaces respectively having a longer side and a shorter side. As shown in FIGS.3A and 3B, the tape cassette I2 comprises a lid lock release button I2a provided on one side surface thereof, a lid I2b provided on a front thereof along the longitudinal direction of the tape cassette I2, and a groove I2c formed on the bottom surface thereof along the longitudinal direction of the tape cassette I2. The groove I2c is provided at a position offset from the center of the shorter side of the tape cassette I2. The loading and unloading apparatus II is mounted within the VTR I3 facing such a direction that the loading and unloading apparatus II receives the tape cassette I2 which is inserted from the one side surface thereof having the shorter side. As shown in FIG.3A, the loading and unloading apparatus II is arranged on the right of the VTR I3 so that a width of the loading and unloading apparatus II along a front face I3a of the VTR I3 is shorter than a depth of the loading and unloading apparatus II along a side surface of the VTR I3. Accordingly, an inserting opening I3b on the front face I3a of the VTR I3 for receiving the tape cassette I2 only needs to have a width which is slightly larger than the shorter side of the tape cassette I2.

A rotary drum I4 is provided on the left of the loading and unloading apparatus II in FIG.3A. When the tape cassette I2 is in a predetermined loaded position within the VTR I3 and the VTR I3 is put into a recording or reproducing mode, for example, a tape loading operation is performed to wrap a magnetic tape (not shown) accommodated within the tape cassette I2 around an outer peripheral surface of the rotary drum I4 over a predetermined angular range. When the tape cassette I2 is inserted into the VTR I3 through the inserting opening I3b from the one side surface thereof having the release button I2a so that the lid I2b is on the left, the tape cassette I2 is carried from a cassette receiving position indicated by a one-dot chain line in FIG.3B to the predetermined loaded position indicated by a two-dot chain line.

As shown in FIGS.I, 2, 5, and 6, a holder I5 of the loading and unloading apparatus II for receiving the inserted tape cassette I2 is open on the left side thereof, that is, on the left side thereof facing the rotary drum I4 so that the tape loading operation can be performed without being interfered by the holder I5. The holder I5 comprises a bottom plate I5a on which the inserted tape cassette I2 rests, a top plate I5b which faces the top surface of the inserted tape cassette I2, and a side plate I5c connecting the top and bottom plates I5b and I5a. Hence, the holder I5 substantially has a sideways U-shape cross section when viewed in a tape cassette inserting direction XI.

The bottom plate I5a is provided with a generally oval opening I5al into which a supply reel base I6 and a take-up reel base I7 of the VTR I3 relatively enter, and a hole I5a2 into which a tape end detection lamp (not shown) of the VTR I3 enters. A projecting pin I8 is also provided on the top surface of the bottom plate I5a at a position

deviated from an imaginary line which passes a center of the loading and unloading apparatus II and extends along the longitudinal direction of the loading and unloading apparatus II. The projecting pin I8 engages with the groove I2c of the tape cassette I2 when the tape cassette I2 is inserted into the VTR I3. The projecting pin I8 prevents the tape cassette I2 from being inserted into the VTR I3 facing an incorrect direction, and also guides the inserted tape cassette I2.

A plate part I5d of the bottom plate I5 extends in a direction Y2. This plate part I5d has a bent portion I5dl which extends in a direction X2 and opposes the top surface of the inserted tape cassette I2, and a bent contact portion I5d2 which also extends in the direction X2 for making contact with the release button I2a of the inserted tape cassette I2. In other words, the contact portion I5d2 is simply a bent integral portion of the plate part I5d of the holder I5 and projects in the direction X2 so as to oppose the release button I2a of the inserted tape cassette I2. The bottom plate I5a has three downwardly projecting portions I5e, I5f, and I5g which project in the direction YI from the bottom surface of the bottom plate I5a. The projecting portions I5e, I5f, and I5g respectively have pins I5el, I5fl, and I5gl which project outwardly of the holder I5.

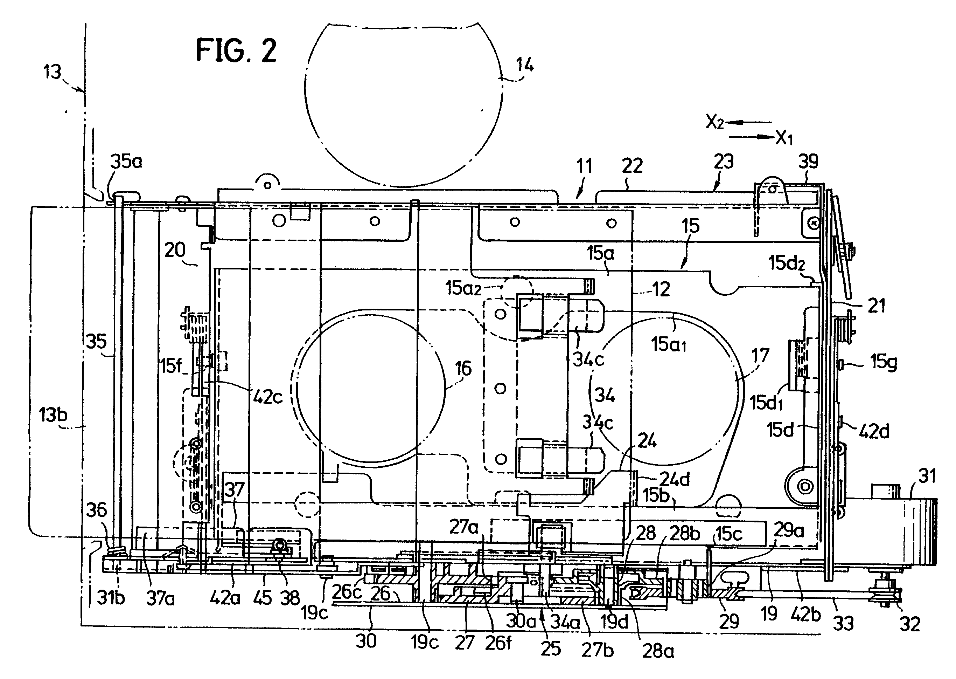

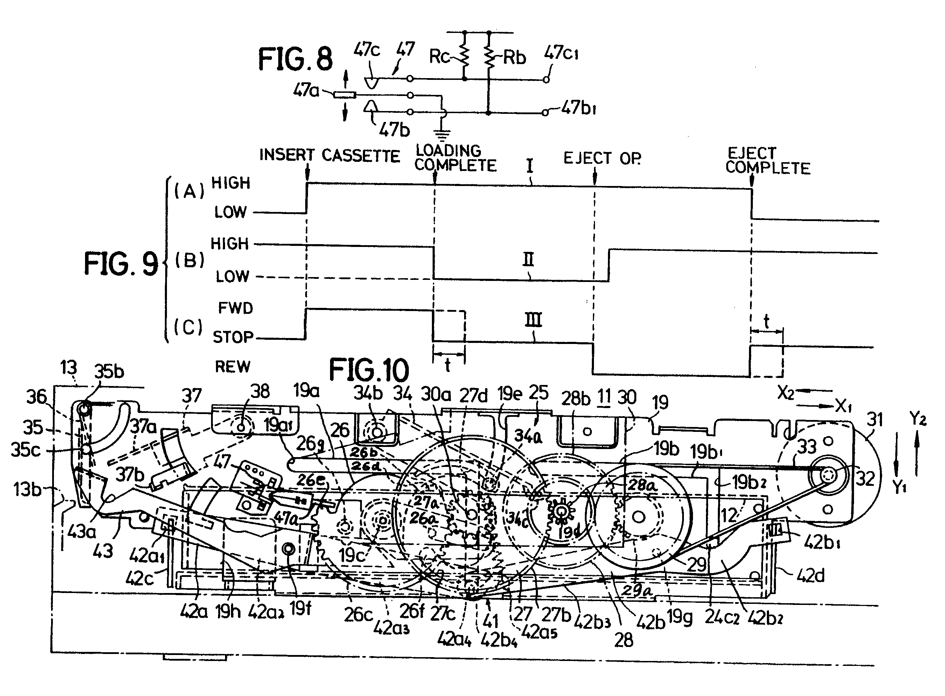

As shown in FIG.2, the holder I5 is supported within a rectangular frame 23 and is movable horizontally between a cassette receiving position shown in FIG.I where the tape cassette I2 is received and an insertion completion position shown in FIG.7 and is movable vertically between the insertion completion position and a predetermined loading position shown in FIG.I0. When the tape cassette I2 is manually inserted in the cassette inserting direction XI into the holder I5 in the cassette receiving position from one side surface of the tape cassette having the shorter side and pushes the holder I5 slightly past the cassette receiving position toward the insertion completion position, the holder I5 is automatically moved to the predetermined loading position via the insertion completion position as will be described later. The frame 23 is constituted by brackets I9 through 22 which are connected to each other. The bracket I9 has an L-shaped guide groove I9a for guiding the pin I5el, the bracket 20 has a guide groove 20a for guiding the pin I5fl, and the bracket 2I has a guide groove 2Ia for guiding the pin I5gl. The holder I5 slides upwardly and downwardly (directions Y2 and YI) in a state where the pins I5el, I5fl, and I5gl are respectively guided within the guide grooves I9a, 20a, and 2Ia.

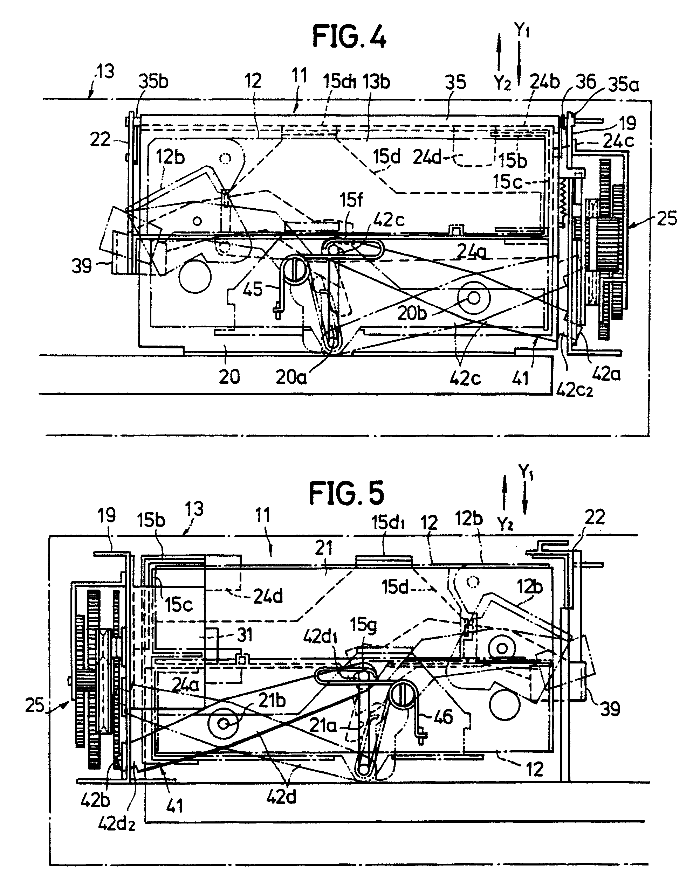

A slide member 24 comprises a bottom part 24a which opposes the bottom surface of the bottom plate I5a of the holder I5, a top part 24b which opposes the upper surface of top plate 15b, and a side part 24c which opposes the outer surface of the side plate 15c as shown in FIG.4. The slide member 24 substantially has a sideways U-shape cross section when viewed in the tape cassette inserting direction X1. The slide member 24 slides in the directions X1 and X2 along the outer side of the holder 15 when inserting and extracting the tape cassette 12.

The slide member 24 has a contact part 24d which is an integral part of the upper part 24b and is formed by bending the upper part 24b downwardly in the direction Y1, and the contact part 24d makes contact with the one side surface of the inserted tape cassette 12.

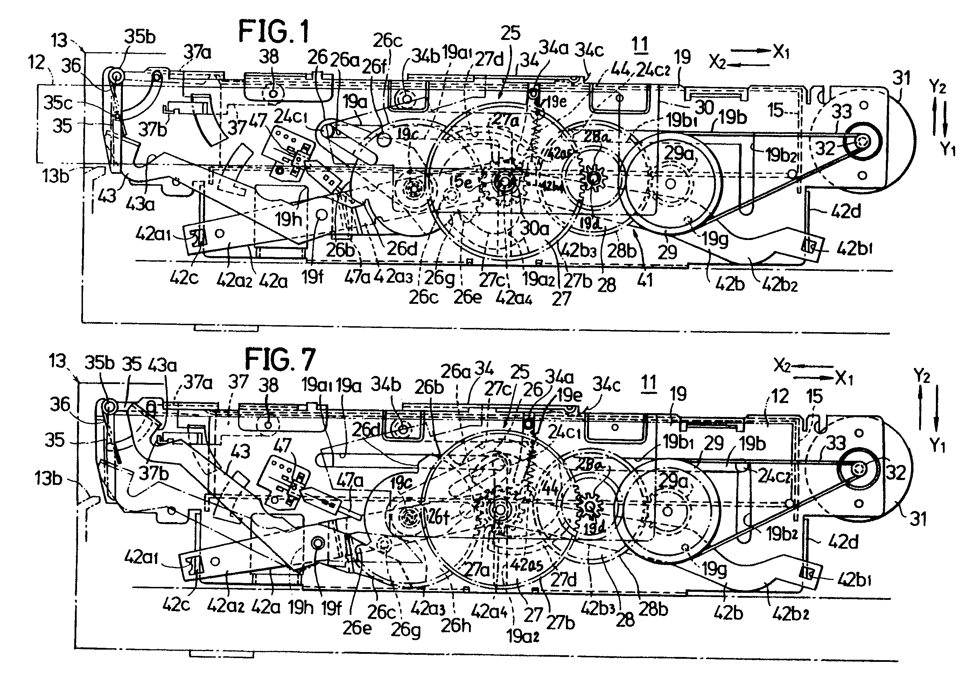

The side part 24c has projecting pins 24c1 and 24c2 projecting outwardly of the slide member 24. The projecting pin 24c1 fits into the L-shaped guide groove 19a, and the projecting pin 24c2 fits into an L-shaped guide groove 19b of the bracket 19. As shown in FIG.1, the projecting pin 24c1 also engages an elongated hole 26a in a rotary arm 26 of a drive transmitting mechanism 25.

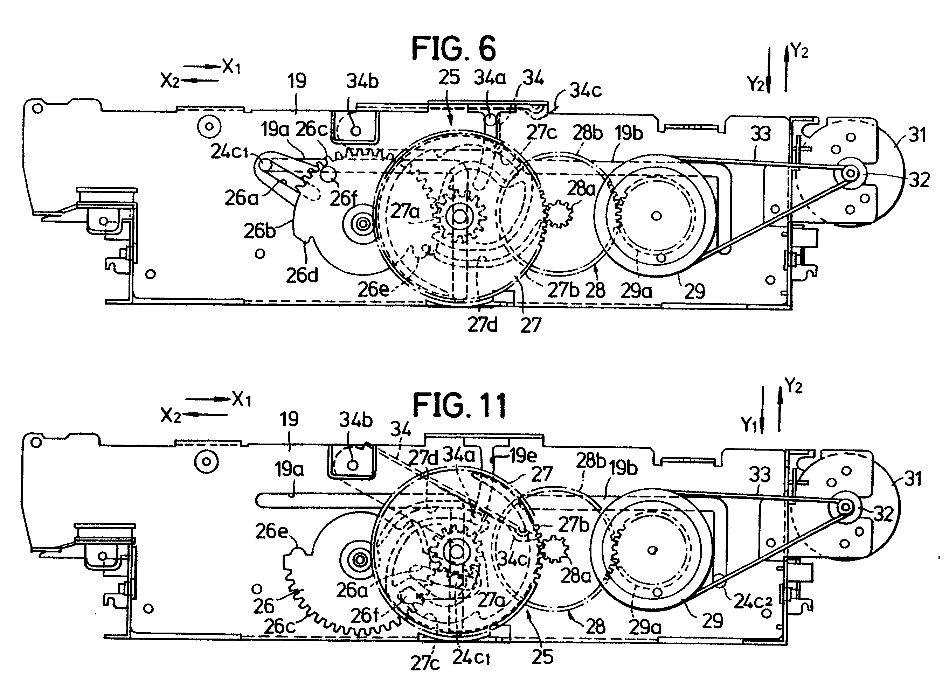

When the rotary arm 26 rotates, the slide member 24 is guided by the guide grooves 19a and 19b and slides horizontally (directions X1 and X2) on the outside of the holder 15. The slide member 24 moves together with the holder 15 when the slide member 24 moves upwardly and downwardly (directions Y2 and Y1). The transmitting mechanism 25 is provided on the bracket 19 of the tape cassette loading and unloading apparatus 11. As shown in FIG.6, the transmitting mechanism 25 comprises the rotary arm 26, a driving gear 27, a reduction gear 28 and a pulley 29.

The rotary arm 26 comprises a gear 26c having an untoothed part 26b, projections 26d and 26e projecting from both ends of the gear 26c, an engaging pin 26f projecting from the surface of the gear 26c, and a contact pin 26g. The rotary arm 26 is rotatably supported on a pin 19c of the bracket 19.

The driving gear 27 comprises as an integral part thereof a small diameter gear 27a which meshes with the gear 26c and a large diameter gear 27b. The driving gear 27 is supported on a pin 30a (coinciding with a pin 15e of the holder 15 in FIG.1) of a mounting plate 30 which is indicated by a one-dot chain line and is secured on the bracket by screws. As indicated by phantom lines in FIG.6, the driving gear 27 comprises a lock groove 27c for locking the engaging pin 26f of the rotary arm 26 when the holder 15 is lowered to a predetermined loading position, and a cam groove 27d into which a projecting pin 34a of a pushing member 34 enters. The lock groove 27c and the cam groove 27d are formed on the flat portion of the large diameter gear 27b. Hence, a lock mechanism is constituted by the engaging pin 26f of the rotary arm 26 and the lock groove 27c of the driving gear 27. The pushing member 34 will be described later.

The reduction gear 28 comprises a small diameter gear 28a which meshes with the large diameter gear 27b of the driving gear 27 and a large diameter gear 28b. The reduction gear 28 is supported on a pin 19d of the bracket 19. The pulley 29 comprises as an integral part thereof a small diameter gear 29a which meshes with the large diameter gear 28b of the reduction gear 28. A belt 33 is provided between the pulley 29 and a pulley 32 which is fixed to a rotary shaft of a drive motor 31.

Accordingly, the rotational driving force of the drive motor 31 is transmitted to the pulley 29 of the transmitting mechanism via the pulley 32 and the belt 33, and is thereafter transmitted to the rotary arm 26 via the reduction gear 28 and the driving gear 27. Hence, the rotary arm 26 is driven at a predetermined rotational speed so as to move the slide member 24 horizontally and to move the slide member 24 vertically together with the holder 15.

The projecting pin 34a of the pushing member 34 projects through an arcuate groove 19e of the bracket 19. Pins 34b provided on both sides of the pushing member 34 are supported by the bracket 19 and a bracket 22. A leaf spring 34c which makes contact with the top surface of the inserted tape cassette 12 is provided at a tip end of the pushing member 34.

As shown in FIG.1, a lid 35 is provided at the inserting opening 13b. Pins 35a and 35b on both sides of the lid 35 are supported by the respective brackets 19 and 22, and the lid 35 is normally closed by the action of a torsion spring 36 fitted on the pin 35a.

A contact member 37 is rotatably supported by a pin 38. The contact member 37 comprises a contact portion 37a which can make contact with a rear surface of the lid 35 and a portion 37b which extends on the outside of the bracket 19 through an arcuate hole 19i in the bracket 19. When the holder 15 is in a cassette receiving position where the tape cassette 12 can be inserted or ejected, the contact member 37 is in contact with an upper surface of a top plate 15b of the holder 15 and is at a position rotated clockwise. For this reason, the contact portion 37a of the contact member 37 is at a raised position where the contact portion 37a does not interfere with the insertion or ejection of the tape cassette 12.

As will be described later, the contact member 37 rotates counterclockwise due to its own weight as the holder 15 moves downwardly to the predetermined loading position. Thus, in this case, the contact portion 37a is at a lowered position confronting the lid 35.

A lid opening member 39 is supported on a bracket 2l. The lid opening member 39 makes contact with the lower edge of the lid l2b of the tape cassette l2 which is lowered to the loaded position and opens the lid l2b.

As shown in FIGS.l, 2, 4 and 5, the tape cassette loading and unloading apparatus ll is provided with an up-down movement synchronizing mechanism 4l. This synchronizing mechanism 4l is provided as a linking mechanism for linking the pin l5e located at the center of the longer side of a bottom plate l5a of the holder l5 and pins l5f and l5g located on the shorter sides of the bottom plate l5a, so that the longer side and the shorter sides of the bottom plate l5a are maintained at identical height positions when the holder l5 is moved upwardly and downwardly.

The synchronizing mechanism 4l comprises levers 42a and 42b rotatably supported on respective pins l9f and l9g of the bracket l9, a lever 42c rotatably supported on a pin 20b of the bracket 20, and a lever 42d rotatably supported on a pin 2lb of the bracket 2l. The lever 42a comprises an arm 42a2 which has a rectangular engaging hole 42al formed at a tip end part thereof and rotates between the outside of the bracket l9 and a lid opening lever 43, and an arm 42a3 which is cranked toward the inside of the bracket l9 and extends in the direction of an arrow Xl by penetrating an opening l9h in the bracket l9. The arm 42a3 has an oval hole 42a4 at a tip end part thereof and is rotatable between the inside of the bracket l9 and the holder l5. Accordingly, the pin l5e of the holder l5 engages the hole 42a4 in the lever 42a on the inside of the bracket l9. A hook 42a5 is formed on the tip end of the arm 42a3, and a coil spring 44 is provided between the hook 42a5 and the pushing member 34.

The lever 42b comprises an arm 42b2 which has a rectangular engaging hole 42bl formed at a tip end thereof and has an arcuate shape so as not to make contact with a pin 24c2 which moves within the guide groove l9b, and an arm 42b3 which extends in the direction of an arrow X2 so that the arm 42b3 can rotate between the outside of the bracket l9 and the transmitting mechanism 25. The arm 42b3 has an oval hole 42b4 at a tip end part thereof. The pin l5e of the holder l5 engages the hole 42b4 in the lever 42b on the outside of the bracket l9.

As shown in FIG.4, the lever 42c has on one end thereof an oval hole 42cl into which the pin l5f of the holder l5 engages, and has on the other end thereof an engaging part 42c2 which engages the engaging hole 42al in the lever 42a. In addition, the lever 42d similarly has on one end thereof an oval hole 42dl into which the pin l5g of the holder l5 engages, and has on the other end thereof an engaging part 42d2 which engages the engaging hole 42bl in the lever 42b.

Hence, the pin l5e of the holder l5 is linked to the pins l5f and l5g via the levers 42a through 42d. For this reason, each of the levers 42a through 42d is linked to the vertical movement of the holder l5, and the pins l5e, l5f and l5g are maintained at identical height positions so that the bottom plate l5a of the holder l5 is kept horizontal due to the rotary displacement of the levers 42a through 42d.

Torsion springs 45 and 46 are provided on the brackets 20 and 2l so as to push the pins l5f and l5g of the holder l5 in the direction of an arrow Y2. The bracket l9 is provided with a motor switch 47 which is closed upon contact with the projection 26d or 26e of the rotary arm 26.

Next, description will be given with respect to the operation of inserting the tape cassette l2 into the tape cassette loading and unloading apparatus ll. As shown in FIGS.3A and 3B, the tape cassette l2 is inserted into the inserting opening l3b from the side surface of the tape cassette l2 having the lid lock release button l2a first. The side surface of the tape cassette l2 having the button l2a pushes the lid 35 and opens the lid 35 against the force of the spring 36. When the tape cassette l2 is inserted to such a position that the side surface of the tape cassette l2 opposite to the side surface having the button l2a substantially coincides with the front face l3a of the VTR l3, the slide member 24 is pushed by the tape cassette l2 and is moved in the direction Xl.

As shown in FIG.8, the motor switch 47 comprises a contact piece 47a which is grounded, and contacts 47b and 47c. The switch 47 is open when the contact piece 47a is connected to neither one of the contacts 47b and 47c. Until the tape cassette l2 is inserted, the projection 26d of the rotary arm 26 is in contact with the contact piece 47a, and the switch 47 is closed in a state where the contact piece 47a is connected to the contact 47c.

As the slide member 24 moves in the direction Xl, the pin 24cl rotates the rotary arm 26 clockwise and the projection 26d of the rotary arm 26 separates from the contact piece 47a to open the switch 47. When the switch 47 is opened, a high-level signal from a resistor Rc is obtained from a terminal 47cl of the switch 47 and a high-level signal from a resistor Rb is obtained from a terminal 47bl of the switch 47. The terminals 47cl and 47bl of the switch 47 are coupled to a control circuit (not shown) for controlling the operation of the tape cassette loading and unloading apparatus ll. Hence, the drive motor 3l is driven to rotate in the forward direction as indicated by lll in FIG.9(C) by a signal from the control circuit responsive to the high-level signal l shown in FIG.9(A) from the terminal 47cl. FIGS.9(A) through 9(C) are time charts respectively showing the high and low level timings of the signal I at the terminal 47cl, a signal II at the terminal 47bl, and the rotating state of the drive motor 31.

Accordingly, when the switch 47 is opened, the drive motor 31 mounted on the end part of the bracket 19 is rotated, and the rotational driving force of the drive motor 31 is transmitted to the pulley 29 of the transmitting mechanism 25 via the pulley 32 and the belt 33.

The rotary arm 26 is rotated clockwise by the rotational driving force of the drive motor 31 which is reduced by the gears 29a, 28b, 28a, 27b, 27a and the like of the transmitting mechanism 25, and the slide member 24 is moved to an insertion completion position shown in FIG.7. The tape cassette 12 is moved in the direction XI together with the slide member 24 in a state where the top and bottom surfaces of the tape cassette 12 are held by holding members (not shown).

When the tape cassette 12 is inserted into the holder 15 and reaches the insertion completion position, the button 12a makes contact with a contact portion 15d2 of the holder 15 and is displaced to a lock release position. In addition, the top surface of the tape cassette 12 in the vicinity of the side surface having the button 12a confronts a bent portion 15dl of the holder 15. In addition, when the rotary arm 26 rotates clockwise, the pins 24cl and 24c2 of the slide member 24 move downwardly from horizontal portions 19al and 19bl of the guide grooves 19a and 19b to vertical portions 19a2 and 19b2 of the guide grooves 19a and 19b. As shown in FIG.10, the tape cassette 12 inserted into the holder 15 is lowered in the direction YI together with the slide member 24 which moves along the guide grooves 19a and 19b until the tape cassette 12 reaches the loaded position.

As the holder 15 moves downwardly from the insertion completion position shown in FIG.7 to the predetermined loading position shown in FIG.10, the pin 15e of the holder 15 is guided by the vertical portion 19a2 of the guide groove 19a and moves in the direction YI. As the pin 15e moves downwardly, the levers 42a and 42b engaged by the pin 15e respectively rotate clockwise and counterclockwise about the respective pins 19f and 19g. Furthermore, the levers 42c and 42d engaged to the levers 42a and 42b are respectively displaced from positions indicated by solid lines in FIGS.4 and 5 to positions indicated by two-dot chain lines in accordance with the rotation of the levers 42a and 42b.

Hence, as the pin 15e moves downwardly, the levers 42a through 42d synchronize the pins 15f and 15g so that the pins 15f and 15g are maintained to height positions identical to that of the pin 15e. When the holder 15 moves downwardly, the lever 42a rotates clockwise following the displacement of the pin 15e. For this reason, the hook 42a5 of the lever 42a pulls one end of the coil spring 44 which has the other end thereof hooked to the pushing member 34. In other words, the pushing member 34 is rotated clockwise by the action of the coil spring 44, and the leaf spring 34c on the tip end of the pushing member 34 makes contact with the top surface of the tape cassette 12.

As the rotary arm 26 is driven and rotated clockwise, the holder 15 moves downwardly and the pushing member 34 rotates clockwise to push against the top surface of the tape cassette 12. In addition, the driving gear 27 rotates counterclockwise, and the cam groove 27d is displaced so as to receive the projecting pin 34a of the pushing member 34 as the projecting pin 34a moves downwardly. The lock groove 27c is rotationally displaced in correspondence with the engaging pin 26f of the rotary arm 26.

As a result, the driving gear 27 rotates counterclockwise and the projecting pin 34a of the pushing member 34 enters into the entrance portion of the cam groove 27d as shown in FIG.11. Since the pushing member 34 is pulled by the coil spring 44, the projecting pin 34a smoothly enters into the cam groove 27d in accordance with the rotation of the driving gear 27. The driving gear 27 drives the rotary arm 26, and the projecting pin 34a moves along the cam groove 27d and rotates the pushing member 34 clockwise. When the holder 15 reaches the predetermined loading position, the tape cassette 12 is firmly held in the loaded position without play by the pushing member 34. In addition, the lower edge of the lid 12b of the tape cassette 12 makes contact with the lid opening member 39 as the holder 15 is moved downwardly and the lid 12b is opened.

As shown in FIG.10, the pin 24c2 makes contact with an end part of the vertical portion 19b2 of the guide groove 19b when the holder 15 reaches the predetermined loading position, and the the projection 26e of the rotary arm 26 makes contact with the contact piece 47a of the switch 47. As may be seen from FIGS.9(B) and 9(C), the supply of current to the drive motor 31 is stopped after a time t from a time when the contact piece 47a makes contact with the contact 47b and the switch 47 is closed, that is, the drive motor 31 is stopped after the time t from the time when the switch 47 is closed. The drive motor 31 does not stop immediately when the switch 47 closes, and continues to rotate for a short time period responsive to a signal from the control circuit described before.

When the holder 15 reaches the predetermined loading position as shown in FIG.11, the gear 26b of the rotary arm 26 confronts the large diameter gear 27b of the driving gear 27 and the rotary arm 26 stops rotating. When the rotary arm 26 stops, the switch 47 is already in the closed state, but the driving gear 27 further rotates counterclockwise because the drive motor 3l still rotates in the forward direction in this state. The engaging pin 26f of the stationary rotary arm 26 relatively enters into the lock groove 27d of the driving gear 27. Finally, the engaging pin 26f makes contact with the end part of the lock groove 27d and the driving gear 27 stops rotating. After the driving gear 27 stops, the pulley 29 slips on the belt 33 until the drive motor 3l stops. In other words, the drive motor 3l is not locked when the loading of the tape cassette l2 is completed, and the reliability of the drive motor 3l is high in that it is possible to prevent a large load that may damage the drive motor 3l from being applied on the drive motor 3l.

When the engaging pin 26f of the rotary arm 26 enters into the lock groove 27c, an imaginary line connecting the center of the rotary arm 26 and the center of the engaging pin 26f becomes perpendicular to an imaginary line connecting the center of the driving gear 27 and the center of the engaging pin 26f. Hence, even when an external force acts on the holder l5 in the predetermined loading position and urges the holder l5 upwardly or downwardly, the rotary arm 26 is locked in a non-rotatable state and is prevented from rotating since the engaging pin 26f is engaged within the lock groove 27c as described before. In other words, because the rotary arm 26 is locked, the holder l5 in the predetermined loading position is prevented from moving even when the external force is applied thereon for some reason.

In addition, the driving gear 27 is also prevented from rotating counterclockwise by the engaging pin 26f of the rotary arm 26. Accordingly, the pushing member 34 is locked by the driving gear 27 in a state where the projecting pin 34a is engaged within the cam groove 27d. For this reason, the tape cassette l2 is stably held in the loaded position by the pushing force of the pushing member 34.

It requires a large pushing force to hold the tape cassette l2 in the loaded position. However, since the pushing member 34 is rotationally displaced by the cam groove 27d of the driving gear 27, the pushing member 34 is rotated mechanically and the tape cassette l2 can be held in the loaded position by the large pushing force of the pushing member 34. Moreover, because the tape cassette l2 is pushed and held in the loaded position by the pushing member 34 and the holder l5 is locked in the predetermined loading position by the driving gear 27, it is possible to effectively prevent an excessively large torque from being applied solely on the rotary arm 26. Consequently, the tape cassette l2 can be held in the loaded position with a sufficiently large pushing force and the holder l5 can be locked in the predetermined loading position without using a bulky motor for the drive motor 3l.

Accompanied by the downward movement of the holder l5, the contact member 37 rotates counterclockwise due to its own weight and the contact portion 37a thereof is lowered. The portion 37b of the contact member 37 makes contact with the end part of the hole l9i and the contact member 37 stops. Thus, when the tape cassette l2 is loaded into the loaded position in the tape cassette loading and unloading apparatus ll, the contact member 37 is rotated to a rotary position where the contact portion 37a is at a lowered position, and the lid 35 is prevented from opening by the contact member 37. In other words, even when an attempt is made to open the lid 35 in the state where the tape cassette l2 is in the loaded position, the lid 35 can only rotate for an extremely small angle and makes contact with the contact portion 37a of the contact member 37 which prevents the lid 35 from being opened. In addition, when the contact member 37 makes contact with the lid 35, an imaginary line connecting the contact portion 37a and the pin 38 which supports the contact member 37 becomes perpendicular to the lid 35. Hence, even when an attempt is made to open the lid 35 from the outside with a large force, the contact member 37 will not rotate and the lid 35 is positively prevented from being opened.

Therefore, even when a child tries to put his hand into the tape cassette loading and unloading apparatus l3 through the inserting opening l3b in the state where the tape cassette l2 is in the loaded position, for example, the lid 35 will not rotate and it is possible to prevent the child from accidentally cutting his hand or the like.

Next, when an eject operation is carried out, the drive motor 3l rotates in the reverse direction as indicated by III in FIG.9(C). Hence, the driving gear 27 is rotated clockwise and the lock groove 27c and the cam groove 27d are displaced accordingly. As the driving gear 27 rotates clockwise, the engaging pin 26f of the rotary arm 26 disengages and separates from the lock groove 27c, and the projecting pin 34a of the pushing member 34 moves in the direction Y2. Thus, the rotary arm 26 is released from the locked state and the pushing member 34 rotates counterclockwise. Consequently, the rotary arm 26 engaged to the pin 24c2 of the slide member 24 starts to rotate counterclockwise. When the rotary arm 26 rotates counterclockwise, the gear 26c of the rotary arm 26 meshes with the small diameter gear 27a of the driving gear 27 and the rotary arm 26 is driven thereby.

Furthermore, when the rotary arm 26 is rotationally driven counterclockwise, the projection 26e separates from the contact piece 47a. As shown in FIGS.9(B) and 9(C), a high-level signal ll

from the resistor Rb is obtained via the terminal 47bl of the switch 47 after the drive motor 3l starts to rotate in the reverse direction.

Accordingly, when the rotary arm 26 is rotated counterclockwise, the slide member 24 moves upwardly in the direction Y2 along the guide grooves l9a and l9b to the insertion completion position and thereafter moves horizontally in the direction X2. On the other hand, the holder l5 is moved upwardly from the predetermined loading position to the insertion completion position together with the slide member 24 accompanying the rotation of the levers 42a through 42d. In addition, the pushing member 34 rotates counterclockwise as the holder l5 moves upwardly because the cam groove 27d is rotationally displaced by the rotation of the driving gear 27. The projecting pin 26g makes contact with the lid opening lever 43, and the lid opening lever 43 is rotated clockwise by the counterclockwise rotation of the rotary arm 26.

As the lid opening lever 43 rotates clockwise, the lid opening lever 43 first makes contact with the portion 37b of the contact member 37 and rotates the contact member 37 and then opens the lid 35. For this reason, the contact member 37 rotates clockwise before the lid 35 opens, and the contact portion 37a is raised to the raised position where the contact portion 37a does not interfere with the opening of the lid 35.

Next, the lid opening lever 43 makes contact with a projecting pin 35c of the lid 35 and rotates the lid 35 counterclockwise against the force of the torsion spring 36. The lid 35 can open smoothly because the contact member 37 has rotated clockwise and the contact portion 37a is already in the raised position. Further, when the lid opening lever 43 rotates clockwise and opens the lid 35 to a fully opened state, the portion 37b of the contact member 37 enters a recess 43a of the lid opening lever 43. Accordingly, the lid 35 and the contact member 37 rotate to positions so as not to interfere with the ejection of the tape cassette l2 as the holder l5 is moved upwardly in the direction Y2 from the predetermined loading position. On the other hand, when the rotary arm 26 rotates counterclockwise, the pins 24cl and 24c2 of the slide member 24 move horizontally along the guide grooves l9a and l9b. For this reason, the tape cassette l2 within the holder l5 is carried in the direction X2 together with the slide member 24 and is ejected through the inserting opening l3b.

When the tape cassette l2 is ejected to the cassette receiving position shown in FIG.l, the pins 24cl and 24c2 of the slide member 24 make contact with the end parts of the guide grooves l9a and l9b and the slide member 24 stops. In addition, the projection 26d of the rotary arm 26 makes contact with the contact piece 47a of the switch 47 when the slide member 24 stops. As may be seen from FIGS.9(A) and 9(C), the supply of the current to the drive motor 3l is continued for the time t after the tape cassette l2 is ejected and the contact piece 47a makes contact with the contact 47c, that is, for the time t after the switch 47 is closed. For this reason, the drive motor 3l continues to rotate in the reverse direction for the short time period responsive to a signal from the control circuit even after the switch 47 is closed so as to positively eject the tape cassette l2. After the pins 24cl and 24c2 of the slide member 24 make contact with the end parts of the guide grooves l9a and l9b and the rotary arm 26 stops, the belt 33 slips until the drive motor 3l stops so as to reduce the load on the drive motor 3l.

During the eject operation, the projecting pin 26g of the rotary arm 26 separates from the lid opening lever 43 as the tape cassette l2 is ejected in the direction X2. Hence, the lid opening lever 43 rotates counterclockwise due to its own weight and separates from the projecting pin 35c of the lid 35. After the ejected tape cassette l2 is extracted from the inserting opening l3b, the lid 35 is closed by the action of the torsion spring 36.

## Claims

1. A tape cassette loading and unloading apparatus comprising a frame (23); a holder (15) movably provided within said frame for receiving and moving a tape cassette (12) which is inserted into said holder, said holder being movable horizontally between a cassette receiving position where the tape cassette is received and an insertion completion position and being movable vertically between said insertion completion position and a predetermined loading position; a motor (31) which rotates in a first direction during a tape cassette loading mode and rotates in a second direction during a tape cassette unloading mode, said second direction being opposite to said first direction; a belt-driven transmitting mechanism (25) coupled to said motor (31) by way of a belt (33) thereof for transmitting a rotational driving force of said motor to said holder (15) so that said holder is moved to said predetermined loading position via said insertion completion position during the tape cassette loading mode and said holder is moved to said cassette receiving position via said insertion completion position during the tape cassette unloading mode; and a lock mechanism (26, 27) for locking said transmitting mechanism in a locked state when said holder reaches said predetermined loading position in the tape cassette loading mode, so that said holder is immovably locked in said predetermined loading position, the apparatus being characterised by a pushing member (34) for pushing a top surface of said tape cassette (12) as said holder moves from said insertion completion position to said predetermined loading position so as to hold said tape cassette in a loaded position when said holder is in said predetermined loading position, said belt-driven transmitting mechanism (25) comprising a first gear (27) having two engaging grooves (27c, 27d), a second gear (26c) having an untoothed part (26b), an engaging (26f), and a rotary arm (26) engaging a pin ($24c_1$) of a slide member (24), said lock mechanism comprising said first and second gears (27, 26c) and said engaging pin (26f) for engaging one of said grooves (27c), said pushing member (34) having a pin (34a) engaged by the other of said grooves (27d).

2. A tape cassette loading and unloading apparatus as claimed in Claim 1, characterised in that said first gear (27) is rotatably supported on said frame (23) and driven by said motor (31) via at least said belt (33), and said second gear (26c) is rotatably supported on said frame for driving said holder (15), said first gear meshing with said second gear so as to transmit the rotational driving force of said motor to said holder and moving said pushing member (34) as said holder moves from said insertion completion position to said predetermined loading position, said second gear stopping at a rotary position where said untoothed part confronts said first gear when said holder reaches said predetermined loading position and said first gear locking said second gear by rotating after said second gear stops.

3. A tape cassette loading and unloading apparatus as claimed in Claim 2, characterised in that said transmitting mechanism further comprises a first pulley (32) fixed to a rotary shaft of said motor (31) and a second pulley (29) rotatably supported on said frame (23) and driven by said belt (33) provided between said first and second pulleys, said first gear (27) being driven by said second pulley.

4. A tape cassette loading and unloading apparatus as claimed in Claim 2, characterised in that said other groove (27d) engages said pushing member (34) when said holder (15) moves from said insertion completion position to said predetermined loading position.

5. A tape cassette loading and unloading apparatus as claimed in Claim 2, characterised in that said first gear (27) comprises a large diameter gear (27b) which is driven by said motor (31) via at least said belt (33), and a small diameter gear (27a) which meshes with said second gear (26c).

6. A tape cassette loading and unloading apparatus as claimed in Claim 2, characterised in that there is further provided a switch (47) for controlling a rotational state of said motor (31), said second gear (26c) comprising a first projection (26e) for activating said switch when said tape cassette (12) is inserted into said holder (15) which moves from said cassette receiving position to said predetermined loading position in the tape cassette loading mode and a second projection (26d) for activating said switch when said holder which accommodates said tape cassette moves from said predetermined loading position to said cassette receiving position in the tape cassette unloading mode.

7. A tape cassette loading and unloading apparatus as claimed in Claim 6, characterised in that said switch (47) stops said motor (31) after a predetermined time from a time when said switch is activated.

8. A tape cassette loading and unloading apparatus as claimed in Claim 2, characterised in that there is further provided an inserting opening (13b) through which said tape cassette (12) is inserted into said holder (15) in said cassette receiving position and a normally closed lid (35) provided at said inserting opening, said second gear (26c) opening said lid when said holder moves toward said insertion completion position from said predetermined loading position in the tape cassette unloading mode.

**Revendications**

1. Dispositif de chargement et de déchargement de cassette à bande magnétique, comportant un châssis (23), un support (15) monté mobile à l'intérieur dudit châssis pour recevoir et déplacer une cassette à bande magnétique (12) qui est introduite dans ledit support, ledit support étant déplaçable horizontalement entre une position de réception de cassette dans laquelle la cassette à bande magnétique est reçue et une position d'introduction complète, le support étant déplaçable verticalement entre ladite position d'introduction complète et une position de chargement prédéterminée, et un moteur (31) qui tourne dans un premier sens pendant un mode de chargement de cassette à bande magnétique et qui tourne dans un second sens pendant un mode de déchargement de cassette à bande magnétique, ledit second sens étant opposé audit premier sens, un mécanisme de transmission commandé par courroie (25) accouplé avec ledit moteur (31) au moyen d'une courroie correspondante (33) pour transmettre la force de rotation d'entraînement dudit moteur audit support (15) de manière que le support soit déplacé vers ladite position de chargement prédéterminée en passant par ladite position d'introduction complète pendant le mode de chargement de cassette à bande magnétique et que ledit support soit déplacé vers ladite position de réception de cassette en passant par ladite position d'introduction complète pendant le mode de déchargement de cassette à bande magnétique, et un mécanisme de verrouillage (26, 27) pour verrouiller ledit mécanisme de transmission dans un état de blocage quand ledit support atteint ladite position de chargement prédéterminée dans le mode de chargement de cassette à bande magnétique, de sorte que ledit support soit bloqué et immobile dans ladite position de chargement prédéterminée, le dispositif étant caractérisé par un élément de poussée (34) pour pousser la surface supérieure de ladite cassette à bande magnétique (12) lorsque ledit support se déplace de ladite position d'introduction complète vers ladite position de chargement prédéterminée, de manière à maintenir ladite cassette à bande magnétique en position chargée quand ledit support est dans ladite position de chargement prédéterminée, ledit mécanisme de transmission commandé par courroie (25) comportant un premier engrenage (27) qui présente deux rainures d'engrenage (27c, 27d), un second engrenage (26c) qui présente une partie non dentée (26b), une broche d'engagement (26f) et un bras rotatif (26) qui commande une broche (24c₁) d'un élément coulissant (24), ledit mécanisme de verrouillage comportant lesdits premier et second engrenages (27, 26c) et ladite broche d'engagement (26f) engrenant avec l'une (27c) desdites rainures, ledit élément de poussée (34) comportant une broche (34a) engrenant avec l'autre (27d) desdites rainures.

2. Dispositif de chargement et de déchargement de cassette à bande magnétique selon la revendication 1, caractérisé en ce que ledit premier engrenage (27) est monté à rotation sur ledit châssis (23) et entraîné par ledit moteur (31) au moins par l'intermédiaire de ladite courroie (33), et ledit second engrenage (26c) est monté à rotation sur ledit châssis pour entrainer ledit support (15), ledit second engrenage présentant une partie non dentée (26b), ledit premier engrenage engrenant avec ledit second engrenage de manière à transmettre la force de rotation d'entraînement dudit moteur audit support et à déplacer ledit élément de poussée (34) lorsque ledit support se déplace de ladite position d'introduction complète vers ladite position de chargement prédéterminée, ledit second engrenage s'arrêtant dans une position de rotation où ladite partie non dentée est en face dudit premier engrenage alors que ledit support atteint ladite position de chargement prédéterminée et ledit premier engrenage verrouillant ledit second engrenage par rotation après l'arrêt dudit second engrenage.

3. Dispositif de chargement et de déchargement de cassette à bande magnétique selon la revendication 2, caractérisé en ce que ledit mécanisme de transmission comporte en outre une première poulie (32) calée sur l'arbre tournant dudit moteur (31) et une seconde poulie (29) montée à rotation sur ledit châssis (23) et entraînée par ladite courroie (33) qui est prévue entre lesdites première et seconde poulies, ledit premier engrenage (27) étant entraîné par ladite seconde poulie.

4. Dispositif de chargement et de déchargement de cassette selon la revendication 2, caractérisé en ce que ladite autre rainure (27d) reçoit ledit élément de poussée (34) quand ledit support (15) se déplace de ladite position d'introduction complète à ladite position de chargement prédéterminée.

5. Dispositif de chargement et de déchargement de cassette selon la revendication 2, caractérisé en ce que ledit premier engrenage (27) comporte un engrenage de grand diamètre (27b) qui est entraîné par ledit moteur (31) par l'intermédiaire d'au moins ladite courroie (33), et un engrenage de petit diamètre (27a) qui engrène avec ledit second engrenage (26c).

6. Dispositif de chargement et de déchargement de cassette selon la revendication 2, caractérisé en ce qu'il est en outre prévu un interrupteur (47) pour commander l'état de rotation dudit moteur (31), ledit second engrenage (26c) comportant une première saillie (26e) pour actionner ledit interrupteur quand ladite cassette à bande magnétique (12) est introduite dans ledit support (15) qui se déplace de ladite position de réception de cassette à ladite position de chargement prédéterminée dans le mode de chargement de cassette à bande magnétique et une seconde saillie (26d) pour actionner ledit interrupteur quand ledit support qui contient ladite cassette à bande magnétique se déplace de ladite position de chargement prédéterminée à ladite position de réception de cassette dans le mode de déchargement de cassette à bande magnétique.

7. Dispositif de chargement et de déchargement de cassette selon la revendication 6, caractérisé en ce que ledit interrupteur (47) arrête ledit moteur (31) après un temps prédéterminé à partir de l'instant où ledit interrupteur a été actionné.

8. Dispositif de chargement et de déchargement de cassette selon la revendication 2, caractérisé en ce qu'il est en outre prévu une ouverture d'introduction (13b) à travers laquelle ladite cassette à bande magnétique (12) est introduite dans ledit support (15) dans ladite position de réception de cassette et un couvercle normalement fermé (35) disposé sur ladite ouverture d'introduction, ledit second engrenage (26c) ouvrant ledit couvercle quand ledit support se déplace vers ladite position d'introduction complète à partir de ladite position de chargement prédéterminée dans le mode de déchargement de cassette.

**Patentansprüche**

1. Bandkassettenlade- und -entladegerät aufweisend einen Rahmen (23); einen Halter (15), der innerhalb dieses Rahmens zur Aufnahme und Bewegung einer Bandkassette (12) vorgesehen ist, welche in diesen Halter eingeführt wird, der zwischen einer Kassettenempfangsstellung, in welcher die Bandkassette empfangen wird, und einer Einführungsendstellung horizontal bewegbar ist und der zwischen dieser Einführungsendstellung und einer vorbestimmten Ladeposition vertikal bewegbar ist; einen Motor (31), der während einer Bandkassettenladebetriebsart in eine erste Richtung dreht und während einer Bandkassettenentladebetriebsart in eine zweite Richtung dreht, welche dieser ersten Richtung entgegengesetzt ist; einen riemengetriebenen Übertragungsmechanismus (25), der über einen Riemen (33) von sich an diesen Motor (31) angekoppelt ist, um eine Rotationsantriebskraft dieses Motors derart auf diesen Halter (15) zu übertragen, daß dieser Halter während der Bandkassettenladebetriebsart über diese Einführungsendstellung in diese vorbestimmte Ladeposition bewegt wird und daß dieser Halter während der Bandkassettenentladebetriebsart über diese Einführungsendstellung in diese Kassettenempfangsstellung bewegt wird; und einen Verriegelungsmechanismus (26, 27), der diesen Übertragungsmechanismus, wenn dieser Halter diese vorbestimmte Ladeposition in der Bandkassettenladebetriebsart erreicht, in einem Verriegelungszustand derart verriegelt, daß dieser Halter in dieser vorbestimmten Ladeposition unbewegbar verriegelt ist, wobei das Gerät gekennzeichnet ist durch ein Schubglied (34), das gegen eine Oberseite dieser Bandkassette (12) stößt, wenn dieser Halter sich aus dieser Einführungsendstellung in diese vorbestimmte Ladeposition bewegt, um so diese Bandkassette in einer geladenen Stellung zu halten, wenn dieser Halter sich in dieser vorbestimmten Ladeposition befindet, wobei der riemengetriebene Übertragungsmechanismus (25) ein erstes Zahnradgetriebe (27), das zwei Eingriffsrillen (27c, 27d) aufweist, ein zweites Zahnradgetriebe (26c) mit einem nichtgezahnten Bereich (26b), einem Eingriffsstift (26f) und einem Dreharm (26) aufweist, der an einen Stift ($24c_1$) eines Gleitstücks (24) angreift, wobei der Verriegelungsmechanismus das erste und zweite Zahnradgetriebe (27, 26c) und den Eingriffsstift (26f) zum Eingriff in eine der Rillen (27c) umfaßt, und wobei das Schubglied (34) einen mit der anderen der Rillen (27d) in Eingriff gebrachten Stift (34a) aufweist.

2. Bandkassettenlade- und -entladegerät nach Anspruch 1, dadurch gekennzeichnet, daß das erste Zahnradgetriebe (27) drehbar auf diesem Rahmen (23) gehaltert ist und zumindest über diesen Riemen (33) von diesem Motor (31) angetrieben wird, und daß das zweite Zahnradgetriebe (26c) drehbar auf diesem Rahmen gehaltert ist, um diesen Halter (15) anzutreiben, daß das erste Zahnradgetriebe derart mit diesem zweiten Zahnradgetriebe in Eingriff ist, daß die Rotationsantriebskraft dieses Motors auf diesen Halter übertragen wird und das Schubglied (34) bewegt wird, wenn dieser Halter sich aus dieser Einführungsendstellung in diese vorbestimmte Ladeposition bewegt, daß das zweite Zahnradgetriebe bei einer Rotationsstellung anhält, bei der dieser nichtgezahnte Bereich diesem ersten Zahnradgetriebe gegenübersteht, wenn dieser Halter diese vorbestimmte Ladeposition erreicht, und wobei dieses erste Zahnradgetriebe dieses zweite Zahnradgetriebe durch Rotation verriegelt, nachdem dieses zweite Zahnradgetriebe anhält.

3. Bandkassettenlade- und -entladegerät nach Anspruch 2, dadurch gekennzeichnet, daß dieser Übertragungsmechanismus weiterhin eine erste Riemenscheibe (32), die an einer Drehwelle dieses Motors (31) befestigt ist, und eine zweite Riemenscheibe (29) aufweist, die drehbar auf diesem Rahmen (23) gehaltert ist und mittels dieses Riemens (33) angetrieben wird, der zwischen dieser ersten und zweiten Riemenscheibe vorgesehen ist, wobei dieses erste Zahnradgetriebe (27) mittels dieser zweiten Riemenscheibe angetrieben wird.

4. Bandkassettenlade- und -entladegerät nach Anspruch 2, dadurch gekennzeichnet, daß diese andere Rille (27d) mit diesem Schubglied (34) in Eingriff gerät, wenn dieser Halter (15) sich aus dieser Einführungsstellung in diese vorbestimmte Ladeposition bewegt.

5. Bandkassettenlade- und -entladegerät nach Anspruch 2, dadurch gekennzeichnet, daß dieses erste Zahnradgetriebe (27) ein Zahnrad (27b) mit großem Durchmesser, das von diesem Motor (31) über zumindest diesen Riemen (33) angetrieben wird, und ein Zahnrad (27a) mit kleinem Durchmesser aufweist, welches mit diesem zweiten Zahnradgetriebe (26c) in Eingriff ist.

6. Bandkassettenlade- und -entladegerät nach Anspruch 2, dadurch gekennzeichnet, daß ferner ein Schalter (47) zur Steuerung eines Rotationszustandes dieses Motors (31) vorgesehen ist, daß dieses zweite Zahnradgetriebe (26c) einen ersten Vorsprung (26e) aufweist, der diesen Schalter aktiviert, wenn diese Bandkassette (12) in diesen Halter (15) eingeführt wird, der sich in der Bandkassettenladebetriebsart aus dieser Kassettenempfangsstellung in diese vorbestimmte Ladeposition bewegt, und einen zweiten Vorsprung (26d) aufweist, der diesen Schalter aktiviert, wenn sich dieser Halter, in den diese Bandkassette aufgenommen ist, in der Bandkassettenentladebetriebsart aus dieser vorbestimmten Ladeposition in diese Kassettenempfangsstellung bewegt.

7. Bandkassettenlade- und -entladegerät nach Anspruch 6, dadurch gekennzeichnet, daß dieser Schalter (47) diesen Motor (31) anhält, nachdem eine vorbestimmte Zeit von dem Zeitpunkt an verstrichen ist, zu dem dieser Schalter aktiviert worden ist.

8. Bandkassettenlade- und -entladegerät nach Anspruch 2, dadurch gekennzeichnet, daß ferner eine Einführungsöffnung (13b), durch welche diese Bandkassette (12) in diesen Halter (15) in dieser Bandkassettenempfangsstellung eingeführt wird, und ein normalerweise geschlossener Deckel (35) vorgesehen sind, der an dieser Einführungsöffnung angeordnet ist, wobei dieses zweite Zahnradgetriebe (26c) diesen Deckel öffnet, wenn sich dieser Halter in der Bandkassettenentladebetriebsart aus dieser vorbestimmten Ladeposition zu dieser Einführungsendstellung bewegt.

FIG.1

FIG.7

FIG. 2

# FIG. 3A

# FIG. 3B

EP 0 215 663 B1

# FIG.4

# FIG.5

FIG. 6

FIG. 11

EP 0 215 663 B1

FIG.8

FIG.9

FIG.10